# EUROPEAN PATENT APPLICATION

(11) **EP 4 779 248 A1**
(43) Date of publication of application: **22.07.2026**
(21) Application number: 25216560.0
(22) Date of filing: 18.11.2025
(51) Int. Cl.: F28D 7/10, F28F 13/06, F28F 27/00

(54) **CYCLONE HEAT EXCHANGE DEVICE AND FILTERING SYSTEM HAVING THE SAME**

(30) Priority: 17.01.2025 TW 114102161
(71) Applicant: Everinn International Co., Ltd., Taichung City 40760 (TW)
(72) Inventor: WU, Tsung-Hsin, 40760 Taichung City (TW)
(74) Representative: V.O.

(57) **Abstract**

A cyclone heat exchange device includes a barrel member (2), an end cap unit (3), a tube unit (4), and a drive unit (6). The tube unit (4) includes a first tube member (41), a second tube member (42), and an adjustment tube member (43) connected to one of the first tube member (42) and the second tube member (43), , and cooperating with another one of the first tube member (41) and the second tube member (42) to define a gap (414) therebetween. The drive unit (6) includes a rotary shaft (61) and a connecting rod (62). Rotation of the rotary shaft (61) drives the adjustment tube member (43) to rotate about an axis (L) relative to the another one of the first tube member (41) and the second tube member (42), thereby expanding or shrinking the gap (414).

## Description

The disclosure relates to a heat exchange device, and more particularly to a cyclone heat exchange device and a filtering system having the same.

Referring to Figure 1, a conventional heat exchange device 1 as disclosed in Taiwanese Invention Patent No. I577960 includes a barrel member 11, two end caps 12 that respectively cover opposite ends of the barrel member 11 and that are removable, and a flow guiding tube set 13 that is surrounded by the barrel member 11 and that is mounted between the end caps 12. Each of the end caps 12 has an air inlet 121 and an air outlet 122. The flow guiding tube set 13 includes a fixed tube 131 and a connection tube 132 that are respectively connected to the end caps 12, and a movable tube 133 that is movably disposed on the connection tube 132. The movable tube 133 and the fixed tube 131 cooperatively define an air gap 134 therebetween. The movable tube 133 is movable along the connection tube 132 relative to the fixed tube 131 to adjust a size of the air gap 134. The barrel member 11 defines a barrel space therein. The flow guiding tube set 13 is disposed in the barrel space and defines a guiding tube space therein. The air gap 134 interconnects the guiding tube space and the barrel space.

The air inlet 121 and the air outlet 122 of each of the end caps 12 are adapted for passage of air therethrough. High-temperature air enters and exits the barrel member 11 through the air inlet 121 of one of the end caps 12 and the air outlet 122 of the other one of the end caps 12, respectively, and low-temperature air enters and exits the flow guiding tube set 13 through the air inlet 121 of the other one of the end caps 12 and the air outlet 122 of the one of the end caps 12, respectively. A portion of the low-temperature air mixes with the high-temperature air in the air gap 134, which cools the high-temperature air down.

The extent to which the high-temperature air is cooled down is determined by an amount of the low-temperature air that mixes with the high-temperature air, and the amount of the low-temperature air is determined by the size of the air gap 134. An adjustment process of the conventional heat exchange device 1 is as follows. The end caps 12 and the barrel member 11 are dismounted from the flow guiding tube set 13 to adjust a position of the movable tube 133 and to thereby adjust the size of the air gap 134, and are mounted back to the flow guiding tube set 13 for testing the temperature of the mixture of the low-temperature air and the high-temperature air. The aforementioned process is conducted multiple times until the temperature of the mixture is satisfactory. It should be noted that, operation of other components connected to the conventional heat exchange device 1 is paused when the adjustment process is being conducted. Hence, the adjustment process of the conventional heat exchange device 1 is complicated and inconvenient, and there is room for improvement.

### SUMMARY

Therefore, an object of the disclosure is to provide a cyclone heat exchange device that can alleviate at least one of the drawbacks of the prior art.

According to an aspect of the disclosure, there is provided a cyclone heat exchange device according to claim 1.

According to an aspect of the disclosure, there is provided a filtering system according to claim 10.

### BRIEF DESCRIPTION OF THE DRAWINGS

Other features and advantages of the disclosure will become apparent in the following detailed description of the embodiment(s) with reference to the accompanying drawings. It is noted that various features may not be drawn to scale.

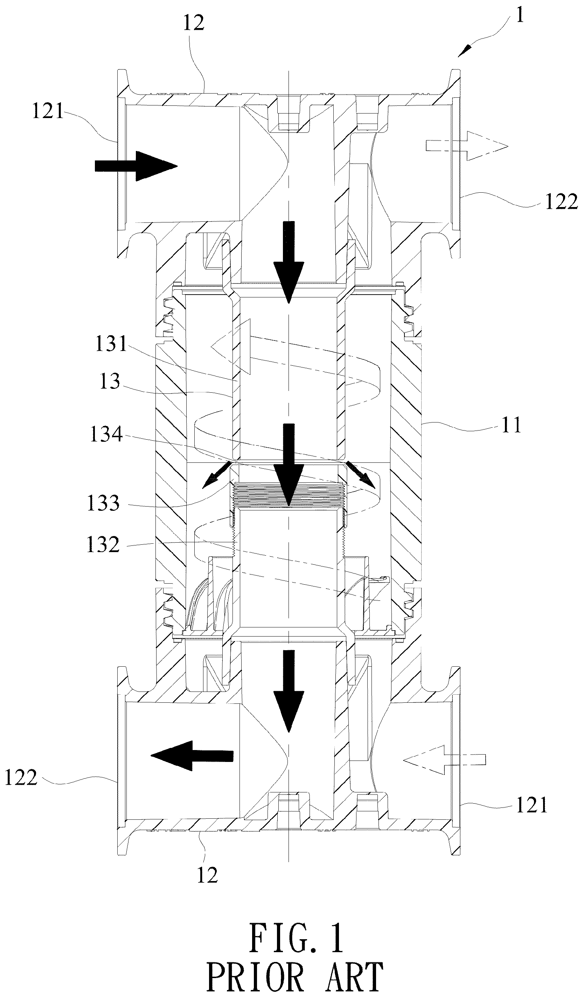

Figure 1 is sectional view of a conventional heat exchange device as disclosed in Taiwanese Invention Patent No. I577960.
Figure 2 is a perspective view illustrating a first embodiment of a cyclone heat exchange device according to the disclosure.
Figure 3 is an exploded perspective view of the first embodiment.
Figure 4 is a sectional view of the first embodiment taken along line IV-IV in Figure 2.
Figure 5 is a sectional view of the first embodiment taken along line V-V in Figure 4.
Figure 6 is a sectional view of the first embodiment taken along line VI-VI in Figure 5.
Figure 7 is a sectional view illustrating a second embodiment of the cyclone heat exchange device according to the disclosure.
Figure 8 is a schematic view, illustrating a sensor module, a control module, and a motor of the embodiment.
Figure 9 is a fragmentary perspective view, illustrating an embodiment of a filter system according to the disclosure.

### DETAILED DESCRIPTION

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

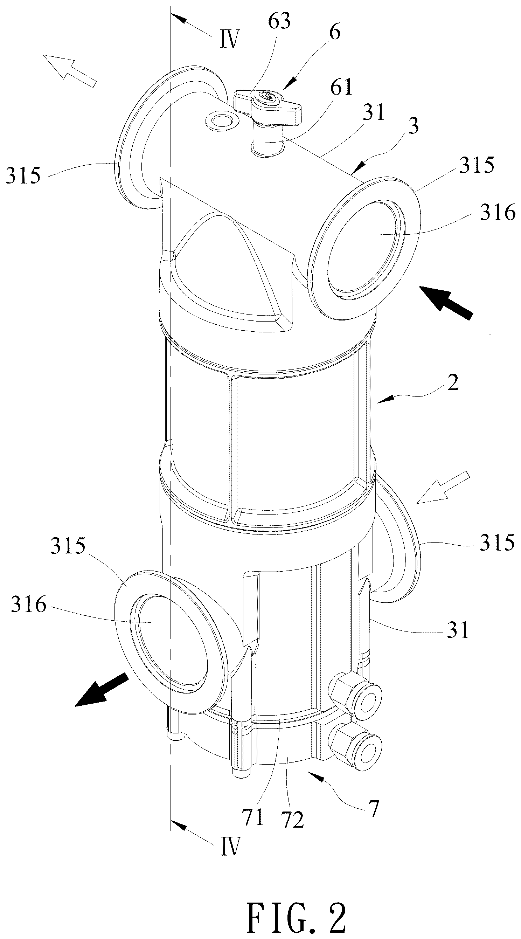

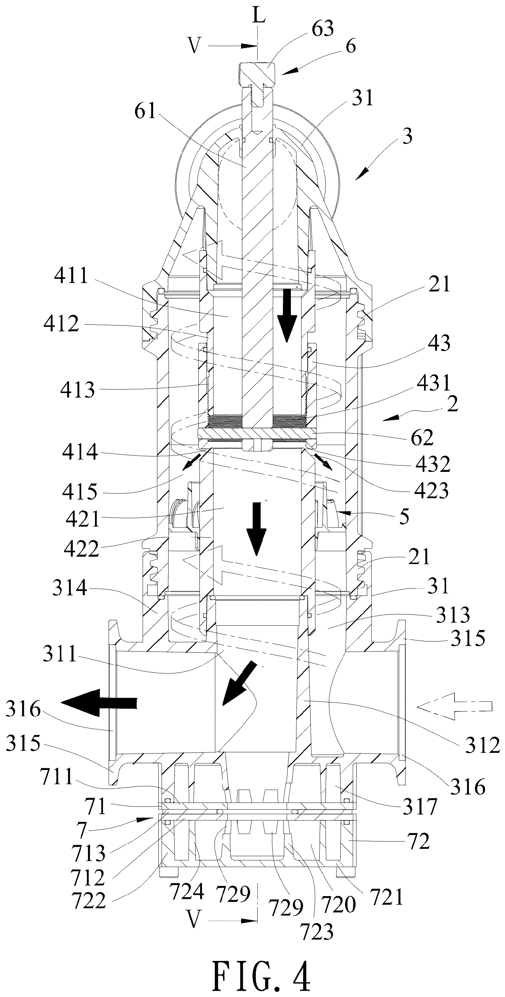

Referring to Figures 2 to 4, a first embodiment of a cyclone heat exchange device according to the disclosure includes a barrel member 2, an end cap unit 3, a tube unit 4, a ring member 5, a drive unit 6, and a cooling unit 7.

The barrel member 2 has two opposite end portions 21 along an axis (L).

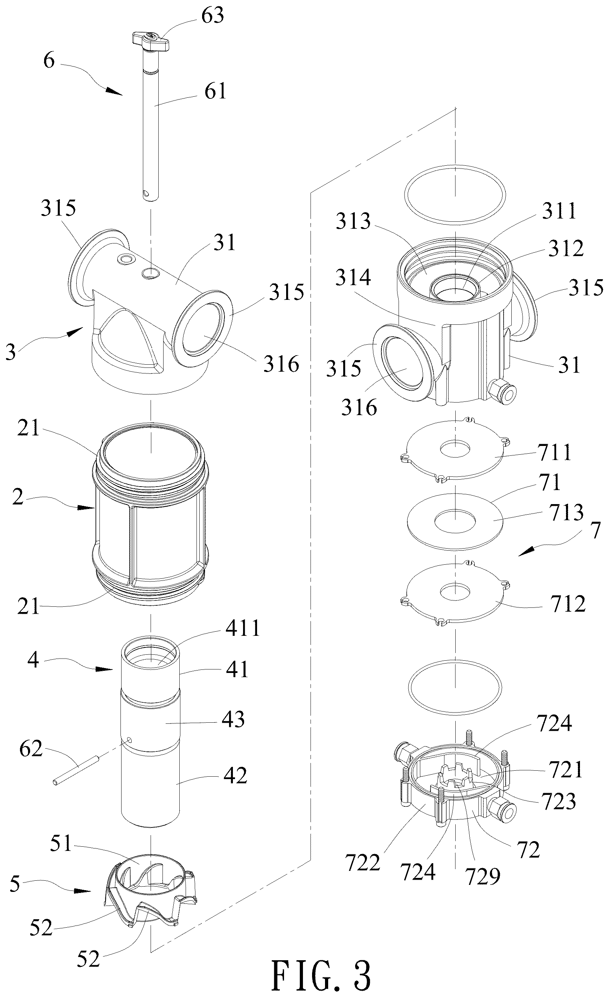

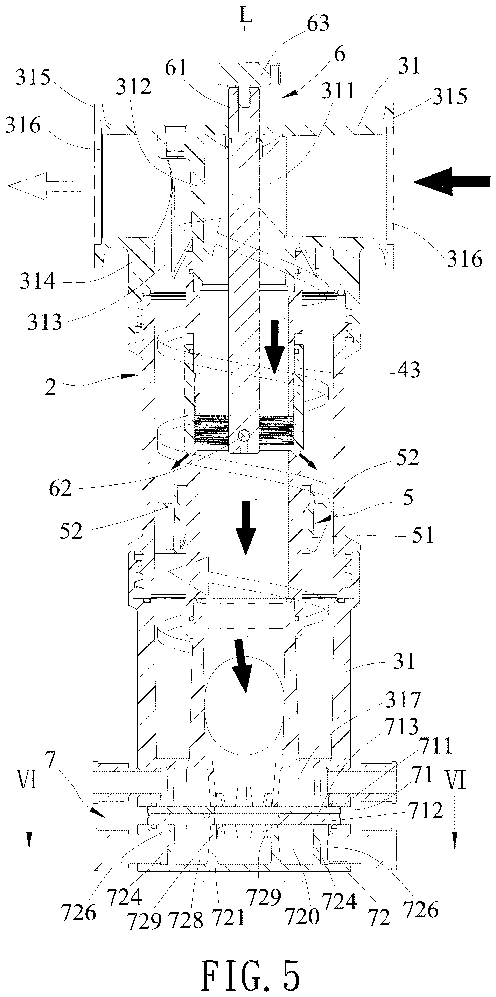

Referring to Figures 3, 4, and 5, the end cap unit 3 includes two end caps 31 that are respectively and removably coupled to the opposite end portions 21. Each of the end caps 31 has a tubular portion 312 that surrounds the axis (L) and that defines a tubular space 311 therein, a main portion 314 that surrounds the tubular portion 312 and that cooperates with the tubular portion 312 to define a curved space 313 therebetween, two flange portions 315 that are spaced apart from each other, and two openings 316. The flange portions 315 respectively define the openings 316. For each of the end caps 31, one of the openings 316 spatially communicates with the tubular space 311, and another one of the openings 316 spatially communicates with the curved space 313. It should be noted that, the tubular space 311 and the curved space 313 are isolated from each other.

The tube unit 4 is surrounded by the barrel member 2, extends along the axis (L), and includes a first tube member 41 and a second tube member 42 that are respectively connected to the end caps 31, and an adjustment tube member 43 that is disposed between the first tube member 41 and the second tube member 42. The first tube member 41 includes a tube wall 412 that surrounds the axis (L) and that defines a tube space 411. The adjustment tube member 43 is connected threadedly to one of the first tube member 41 and the second tube member 42, is spaced apart from another one of the first tube member 41 and the second tube member 42 along the axis (L), and cooperates with the another one of the first tube member 41 and the second tube member 42 to define a gap 414 therebetween. The tube unit 4 and the barrel member 2 cooperatively define a vortex space 415 therebetween. In this embodiment, the adjustment tube member 43 is connected threadedly to the first tube member 41. The first tube member 41 has a first threaded portion 413 that is formed on an outer surface thereof. The second tube member 42 includes a tube wall 422 that surrounds the axis (L) and that defines a tube space 421. The gap 414 interconnects the tube spaces 411, 421 of the first tube member 41 and the second tube member 42 and the vortex space 415. In this embodiment, the second tube member 42 has an outer frustoconical surface 423; furthermore, the adjustment tube member 43 has a second threaded portion 431 that is formed in an inner surface thereof, and that is threadedly engaged with the first threaded portion 413 of the first tube member 41 , and an inner frustoconical surface 432 that faces the outer frustoconical surface 423. The inner frustoconical surface 432 and the outer frustoconical surface 423 cooperatively define the gap 414 therebetween. In this embodiment, the first threaded portion 413 is an external thread, and the second threaded portion 431 is an internal thread, but in other embodiments, the first threaded portion 413 may be an internal thread, and the second threaded portion 431 may be an external thread. Furthermore, in other embodiments, the inner frustoconical surface 432 may be formed on the second tube member 42, and the outer frustoconical surface 423 may be formed on the adjustment tube member 43.

The ring member 5 includes a main body 51 that surrounds the axis (L) and that is disposed between the end cap unit 3 and the tube unit 4, and a plurality of blades 52 that are connected to an outer surface of the main body 51 for guiding a fluid in the vortex space 415 to form a vortex.

In this embodiment, the barrel member 2, the end caps 31, the tube unit 4, the ring member 5 are made of metal (e.g., copper or aluminum) to raise heat transferring efficiency.

The drive unit 6 extends through one of the end caps 31. The drive unit 6 includes a rotary shaft 61 that extends rotatably along the axis (L) through the one of the end caps 31, a connecting rod 62 that is perpendicular to the axis (L) and that is connected to the rotary shaft 61 and the adjustment tube member 43, and an operating member 63 that is disposed outside of the one of the end caps 31, that is connected to an end of the rotary shaft 61, and that is operable for driving rotation of the rotary shaft 61 about the axis (L), which drives the adjustment tube member 43 to rotate about the axis (L) relative to the first tube member 41, thereby expanding or shrinking the gap 414. Specifically, the connecting rod 62 has opposite two ends that are disposed respectively at opposite two sides of the axis (L) and that are connected to the adjustment tube member 43. In this embodiment, the rotary shaft 61 and the connecting rod 62 are made of metal (e.g., copper or aluminum) to raise heat transferring efficiency.

The one of the openings 316 of the one of the end caps 31, the tubular space 311 of the one of the end caps 31, the tube spaces 411, 421 of the first tube member 41 and the second tube member 42, the inner space of the adjustment tube member 43, the tubular space 311 of another one of the end caps 31 that is opposite to the drive unit 6, and the one of the openings 316 of the another one of the end caps 31 cooperatively define a first flow channel. The another one of the openings 316 of the one of the end caps 31, the curved space 313 of the one of the end caps 31, the vortex space 415, the curved space 313 of the another one of the end caps 31, and the another one of the openings 316 of the another one of the end caps 31 cooperatively define a second flow channel. The first flow channel and the second flow channel are adapted for passage of fluids.

The main portion 314 of the another one of the end caps 31 defines a heat absorption path 317. The cooling unit 7 is mounted to the another one of the end caps 31, and includes a thermoelectric cooling module 71 and a heat dissipation module 72 that is in contact with the thermoelectric cooling module 71. The thermoelectric cooling module 71 includes a heat absorption plate 711 that is adjacent to the another one of the end caps 31, and that is for absorbing heat, a heat dissipation plate 712 that is opposite to the heat absorption plate 711, and that is for dissipating heat, and a thermoelectric cooling chip 713 that is sandwiched between the heat absorption plate 711 and the heat dissipation plate 712. The heat dissipation module 72 is in contact with the heat dissipation plate 712 and defines a heat dissipation path 720 that is adapted for passage of a fluid.

Due to the Peltier effect, when the cooling unit 7 is connected to a direct current source, the heat absorption plate 711 absorbs heat, and the heat dissipation plate 712 releases heat. Since the heat dissipation plate 712 is not in contact with the another one of the end caps 31 and the barrel member 2, heat transfer to the another one of the end caps 31 is slowed down and decreased, and heat from the another one of the end caps 31 and heat from a fluid flowing through the heat absorption path 317 are removed by the heat absorption plate 711, which greatly lowers temperature of the another one of the end caps 31. Consequentially, corresponding temperatures of the barrel member 2, the first tube member 41, the second tube member 42, and the ring member 5 are also greatly lowered due to heat dissipation.

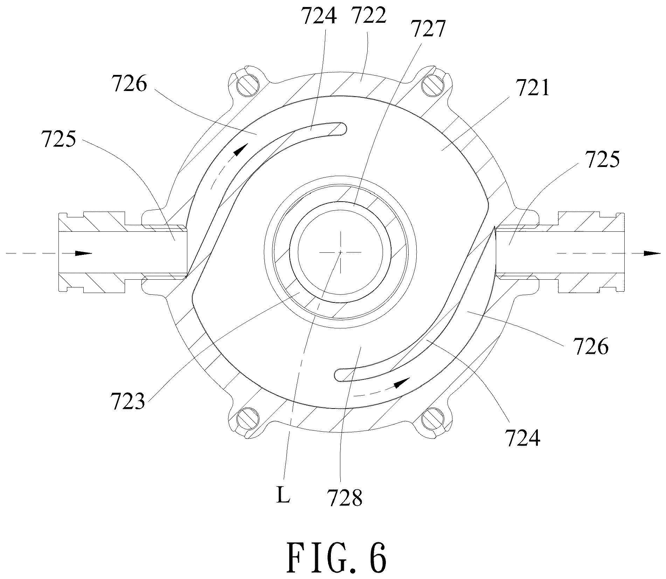

Referring to Figures 3, 5 and 6, the heat dissipation module 72 includes a base wall 721 that is spaced apart from the heat dissipation plate 712 along the axis (L), an outer surrounding wall 722 that extends from a periphery of the base wall 721 to the heat dissipation plate 712, and that is formed with two apertures 725 respectively located at opposite sides of the axis (L), an inner surrounding wall 723 that extends from the base wall 721 to the heat dissipation plate 712, that surrounds the axis (L), and that is surrounded by the outer surrounding wall 722, and two guide walls 724 that are connected between the base wall 721 and the heat dissipation plate 712, and that extend from the outer surrounding wall 722 into a space between the outer surrounding wall 722 and the inner surrounding wall 723. Each of the outer guide walls 724 cooperates with the outer surrounding wall 722, the base wall 721, and the heat dissipation plate 712 to define an outer curved groove 726 that is in spatial communication with a respective one of the apertures 725. The inner surrounding wall 723, the base wall 721, and the heat dissipation plate 712 cooperatively define an annular groove 727. The guide walls 724, the base wall 721, the heat dissipation plate 712, and the inner surrounding wall 723 cooperatively define an inner ring groove 728 that spatially communicates with the outer grooves 726. The inner surrounding wall 723 is formed with a plurality of notches 729 that are located around the axis (L), that are angularly spaced apart from each other, and that interconnect the annular groove 727 and the inner ring groove 728. The heat dissipation path 720 passes through the apertures 725, the outer surrounding wall 722, the guide walls 724, the outer curved grooves 726, the annular groove 727, the inner ring groove 728, the notches 729 and the inner surrounding wall 723, such that the fluid flowing through the heat dissipation path 720 removes heat from the heat dissipation plate 712.

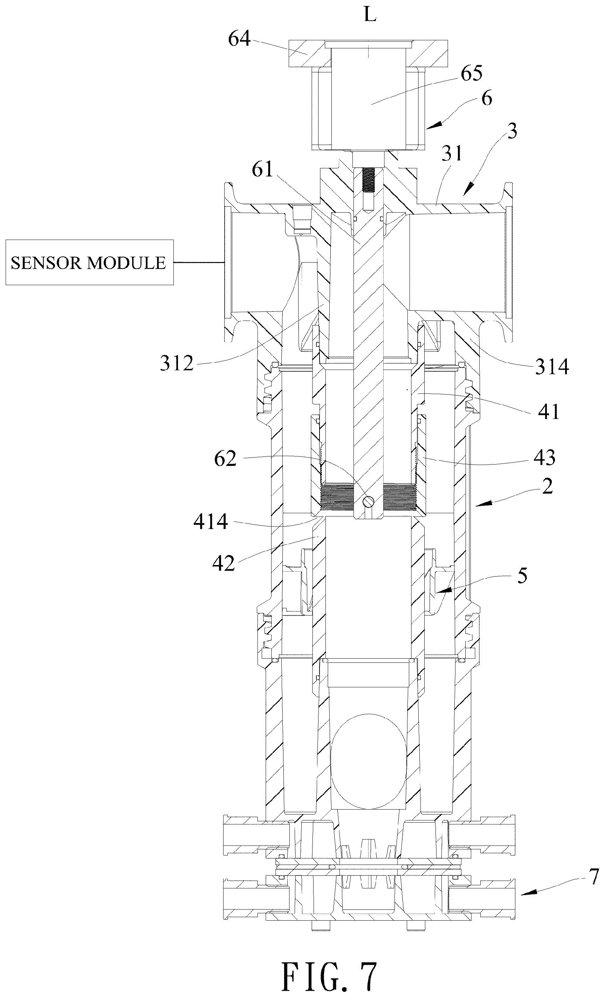

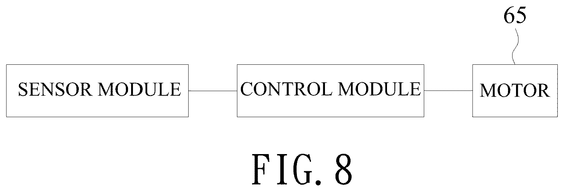

Referring to Figures 7 and 8, a second embodiment of the cyclone heat exchange device according to the disclosure is similar to the first embodiment, but the operating member 63 is omitted, and the drive unit 6 further includes a connecting seat 64 that is disposed on the one of the end caps 31, a motor 65 that is disposed on the connecting seat 64 and that is disposed for driving the rotation of the rotary shaft 61 about the axis (L), a control module that is signally connected to the motor 65, and a sensor module that is disposed on the one of the end caps 31, and that is signally connected to the control module. The sensor module is operable for sensing humidity and temperature of a fluid flowing out of the another one of the openings 316 of the one of the end caps 31, and for outputting a humidity signal and a temperature signal to the control module. The control module receives the humidity signal and the temperature signal and operates the motor 65 to expand or shrink the gap 414 accordingly.

Hence, the second embodiment can automatically adjust the gap 414 as needed through the sensor module and the control module, which is convenient.

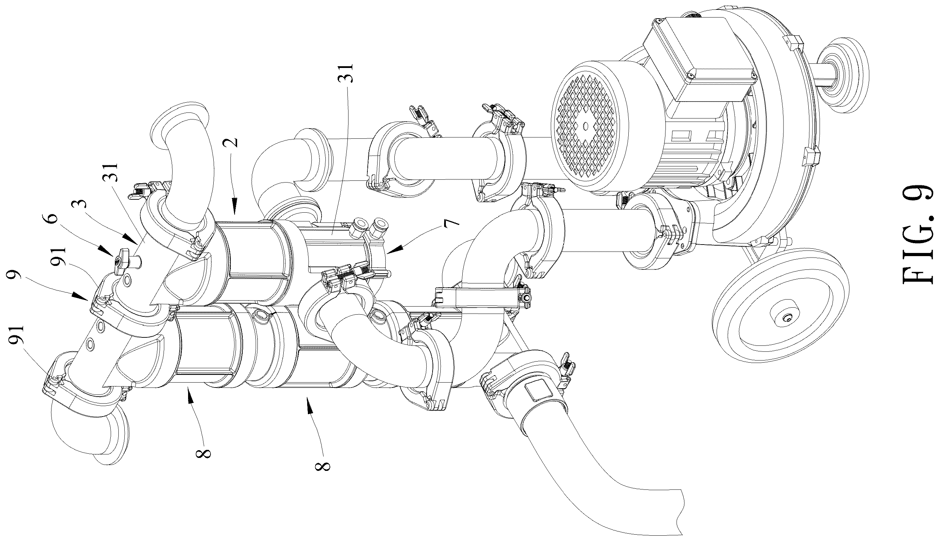

Referring to Figure 9, an embodiment of a filtering system according to the disclosure includes at least one abovementioned cyclone heat exchange device, at least one filter device 8, and a link device 9. In this embodiment, the at least one cyclone heat exchange device includes one cyclone heat exchange device, and the at least one filter device 8 includes two filter devices 8 connected to each other.

The filter devices 8 are adapted for filtering a fluid passing therethrough and capturing moisture, oil mist, dust, and particles contained in the fluid.

The link device 9 interconnects the cyclone heat exchange device and one of the filter devices 8, and includes a plurality of link units 91. The link units 91 are removably connected between the cyclone heat exchange device and the one of the filter devices 8. In this embodiment, each of the link units 91 is a quick-release clamp. In other embodiments, the numbers of the cyclone heat exchange device and the filter device 8 may vary, and each of the link units 91 may be another component that can interconnect a corresponding one of the filter devices 8 and a corresponding one of the cyclone heat exchange devices or interconnect two corresponding ones of the cyclone heat exchange devices. In another embodiment, pipes may be added between the link units 91 and the cyclone heat exchange device. Since the link device 9 is well known in the art, further description thereof will be omitted for the sake of brevity.

Referring to Figure 9, the cyclone heat exchange device and the filter devices 8 are connected in parallel. In other embodiments, the cyclone heat exchange device and the filter devices 8 may be connected in series. In another embodiment where the at least one cyclone heat exchange device includes a plurality of cyclone heat exchange devices, the cyclone heat exchange devices may be connected in series or in parallel. In another embodiment where the at least one filter device 8 includes a plurality of filter devices 8 (e.g., more than two filter devices 8), the cyclone heat exchange devices and the filter devices 8 may be connected in parallel or in series. Each of the filter devices 8 may be a cyclone separation filter module as disclosed in Taiwanese Invention Patent No. I589344, or a cyclone filter as disclosed in Taiwanese Invention Patent Application Publication No. 201912230. Since the filter devices 8 are well known in the art, further description thereof will be omitted for the sake of brevity.

In conclusion, the advantages of the cyclone heat exchange device of the disclosure is as follows.
1. Since the size of the gap 414 can be adjusted immediately through operation of the operating member 63, and can be adjusted without removing the end caps 31 and the barrel member 2 and pausing operation of other components connected to the cyclone heat exchange device, operation of the cyclone heat exchange device is convenient.
2. The rotary shaft 61 being driven by the motor 65 saves manpower.
3. Through the control module and the sensor module, the gap 414 is automatically expanded or shrunken, which also saves manpower.
4. The cooling unit 7 lowers the temperature of the fluid flowing through the cyclone heat exchange device, and when the temperature of the fluid is lowered to a certain extent, moisture in the fluid condenses into water, thereby lowering humidity of the fluid. Furthermore, the water captures particles in the fluid, which cleans the fluid.

Hence, the objective of the disclosure is achieved.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A cyclone heat exchange device including:
a barrel member (2) having two opposite end portions (21) along an axis (L);
an end cap unit (3) including two end caps (31) that are respectively and removably coupled to said opposite end portions (21), each of said end caps (31) having two openings (316);
a tube unit (4) surrounded by said barrel member (2) and extending along the axis (L), said tube unit (4) including a first tube member (41) and a second tube member (42) that are respectively connected to said end caps (31), and an adjustment tube member (43) that is disposed between said first tube member (41) and said second tube member (42), each of said first tube member (41) and said second tube member (42) including a tube wall (412, 422) that surrounds the axis (L) and that defines a tube space (411, 421), said adjustment tube member (43) being connected threadedly to one of said first tube member (41) and said second tube member (42), being spaced apart from another one of said first tube member (41) and said second tube member (42) along the axis (L), and cooperating with said another one of said first tube member (41) and said second tube member (42) to define a gap (414) therebetween, said tube unit (4) and said barrel member (2) cooperatively defining a vortex space (415) therebetween,
one of said openings (316) of one of said end caps (31), said tube spaces (411, 421) of said first tube member (41) and said second tube member (42), an inner space of said adjustment tube member (43), and one of said openings (316) of another one of said end caps (31) cooperatively defining a first flow channel,
another one of said openings (316) of said one of said end caps (31), said vortex space (415), and another one of said openings (316) of said another one of said end caps (31) cooperatively defining a second flow channel,
said gap (414) interconnecting said tube spaces (411, 421) of said first tube member (41) and said second tube member (42) and said vortex space (415); and
a ring member (5) including a main body (51) that surrounds the axis (L) and that is disposed between said end cap unit (3) and said tube unit (4), and a plurality of blades (52) that are connected to an outer surface of said main body (51) for guiding a fluid in said second flow channel to form a vortex;
wherein said barrel member (2), said end caps (31), said tube unit (4), said ring member (5) are made of metal;
**characterized in that**:
said cyclone heat exchange device further includes a drive unit (6) including a rotary shaft (61) that extends rotatably along the axis (L) through said one of said end caps (31), and a connecting rod (62) that is perpendicular to the axis (L) and that is connected to said rotary shaft (61) and said adjustment tube member (43) such that rotation of said rotary shaft (61) about the axis (L) drives said adjustment tube member (43) to rotate about the axis (L) relative to said another one of said first tube member (41) and said second tube member (42), thereby expanding or shrinking said gap (414); and
said rotary shaft (61) and said connecting rod (62) are made of metal.

2. The cyclone heat exchange device as claimed in claim 1, wherein:
one of said adjustment tube member (43) and said another one of said first tube member (41) and said second tube member (42) has an inner frustoconical surface (432);
another one of said adjustment tube member (43) and said another one of said first tube member (41) and said second tube member (42) has an outer frustoconical surface (423) that faces said inner frustoconical surface (432); and
said inner frustoconical surface (432) and said outer frustoconical surface (423) cooperatively define said gap (414) therebetween.

3. The cyclone heat exchange device as claimed in any one of claims 1 and 2, wherein said drive unit (6) further includes an operating member (63) that is disposed outside of said one of said end caps (31), that is connected to an end of said rotary shaft (61), and that is operable for driving the rotation of said rotary shaft (61) about the axis (L).

4. The cyclone heat exchange device as claimed in any one of claims 1 to 3, wherein said connecting rod (62) has opposite two ends that are disposed respectively at opposite two sides of the axis (L) and that are connected to said adjustment tube member (43).

5. The cyclone heat exchange device as claimed in any one of claims 1 to 4, wherein said drive unit (6) further includes a connecting seat (64), and a motor (65) that is disposed on said connecting seat (64) and that is disposed for driving the rotation of said rotary shaft (61) about the axis (L).

6. The cyclone heat exchange device as claimed in claim 5, wherein:
said drive unit (6) further includes a control module that is signally connected to said motor (65), and a sensor module that is disposed on said one of said end caps (31), and that is signally connected to said control module;
said sensor module is operable for sensing humidity of a fluid flowing from said another one of said openings (316) of said one of said end caps (31) and outputting a humidity signal, and sensing a temperature of the fluid flowing from said another one of said openings (316) of said one of said end caps (31) and outputting a temperature signal; and
said control module receives the humidity signal and the temperature signal, and operates said motor (65) to expand or shrink said gap (414).

7. The cyclone heat exchange device as claimed in any one of claims 1 to 6, wherein:
each of said end caps (31) has a tubular portion (312) that surrounds the axis (L) and that defines a tubular space (311) therein, and a main portion (314) that surrounds said tubular portion (312) and that cooperates with said tubular portion (312) to define a curved space (313) therebetween;
said one of said openings (316) of said one of said end caps (31), said tubular space (311) of said one of said end caps (31), said tube spaces (411, 421) of said first tube member (41) and said second tube member (42), said inner space of said adjustment tube member (43), said tubular space (311) of said another one of said end caps (31), and said one of said openings (316) of said another one of said end caps (31) cooperatively define said first flow channel; and
said another one of said openings (316) of said one of said end caps (31), said curved space (313) of said one of said end caps (31), said vortex space (415), said curved space (313) of said another one of said end caps (31), and said another one of said openings (316) of said another one of said end caps (31) cooperatively define said second flow channel.

8. The cyclone heat exchange device as claimed in claim 7, further comprising a cooling unit (7) that is mounted to said another one of said end caps (31) that is opposite to said drive unit (6), wherein:
said cooling unit (7) includes
a thermoelectric cooling module (71) that includes a heat absorption plate (711) adjacent to said another one of said end caps (31), a heat dissipation plate (712) opposite to said heat absorption plate (711), and a thermoelectric cooling chip (713) sandwiched between said heat absorption plate (711) and said heat dissipation plate (712), and
a heat dissipation module (72) that is in contact with said heat dissipation plate (712) and that defines a heat dissipation path (720), such that a fluid that flows through said heat dissipation path (720) removes heat from said heat dissipation plate (712); and
said main portion (314) of said another one of said end caps (31) to which said cooling unit (7) is mounted defines a heat absorption path (317), such that heat from said another one of said end caps (31) and heat from a fluid flowing through said heat absorption path (317) are removed by said heat absorption plate (711).

9. The cyclone heat exchange device as claimed in claim 8, wherein:
said heat dissipation module (72) includes
a base wall (721) that is spaced apart from said heat dissipation plate (712) along the axis (L),
an outer surrounding wall (722) that extends from a periphery of said base wall (721) to said heat dissipation plate (712), and that is formed with two apertures (725) being respectively located at opposite sides of the axis (L),
an inner surrounding wall (723) that extends from said base wall (721) to said heat dissipation plate (712), that surrounds the axis (L), and that is surrounded by said outer surrounding wall (722), said inner surrounding wall (723) being formed with a plurality of notches (729) that are located around the axis (L) and that are angularly spaced apart from each other, and
two guide walls (724) that are connected between said base wall (721) and said heat dissipation plate (712), and that extend from said outer surrounding wall (722) into an space between said outer surrounding wall (722) and said inner surrounding wall (723); and
said heat dissipation path (720) passes through said apertures (725), said outer surrounding wall (722), said guide walls (724), said plurality of notches (729) and said inner surrounding wall (723).

10. A filtering system comprising:
at least one cyclone heat exchange device as claimed in any one of claims 1 to 9;
at least one filter device (8) adapted for filtering a fluid passing therethrough and capturing moisture, oil mist, dust, and particles contained in the fluid; and
a link device (9) interconnecting said at least one cyclone heat exchange device and said at least one filter device (8).
